# EUROPÄISCHE PATENTSCHRIFT

(11) **EP 0 496 216 B1**
(45) Veröffentlichungstag und Bekanntmachung des Hinweises auf die Patenterteilung: **27.03.1996**
(21) Anmeldenummer: 92100296.0
(22) Anmeldetag: 09.01.1992
(51) Int. Cl.: H04M 1/04, H04Q 7/20

(54) **Funksprechgerät der elektrischen Nachrichtentechnik**
Radio talking set of the electric communications technique
Appareil radio-téléphonique de la technique des communications électriques

(30) Priorität: 17.01.1991 DE 9100527 U
(43) Veröffentlichungstag der Anmeldung: 29.07.1992
(73) Patentinhaber: SIEMENS AKTIENGESELLSCHAFT, D-80333 München (DE)
(72) Erfinder: Hackbarth, Andreas, W-8000 München 80 (DE); Bader, Harald, W-8000 München 5 (DE); Kiesewetter, Reinhold, W-8056 Neufahrn (DE); Meschenmoser, Friedrich, W-8000 München 90 (DE)

(56) Entgegenhaltungen:
- EP-A- 0 279 233
- CH-A- 675 336
- DE-A- 3 507 016
- DE-A- 3 742 242

## Beschreibung

Die Erfindung bezieht sich auf ein Funksprechgerät der elektrischen Nachrichtentechnik, insbesondere Autofunkgerät, (siehe z.B. DE-A-3 742 242), bei dem der aus der Hör-Sprechgarnitur bestehende Handapparat auf der Oberseite mit Bedienungstasten versehen ist und mit der Unterseite im Ruhezustand auf der mit Magnethalterung versehenen Auflage liegt.

Ausgehend von einer derartigen Anordnung liegt der Erfindung die Aufgabe zugrunde, einen möglichst leichten, ansprechenden Handapparat vorzuschlagen, der gut griffig und bedienbar ist, und der sich mit einfachen Mitteln stoßgesichert in der Auflage hält.

Diese Aufgabe wird bei einem Funksprechgerät der eingangs genannten Art dadurch gelöst, daß der Handapparat aus einem geringfügig nach innen durchgebogenen im übrigen flachen Grundkörper besteht, der innen zum Bedienenden und zur Auflage hin eine Vertiefung hat, in der der eine Teil der Magnethalterung liegt, dessen Gegenpart in einer der Vertiefung angepaßten Erhöhung der Auflage angeordnet ist.

Weitere vorteilhafte Ausbildungen der Erfindung finden sich in den Unteransprüchen.

Nachstehend wird die Erfindung anhand zweier Figuren näher erläutert.

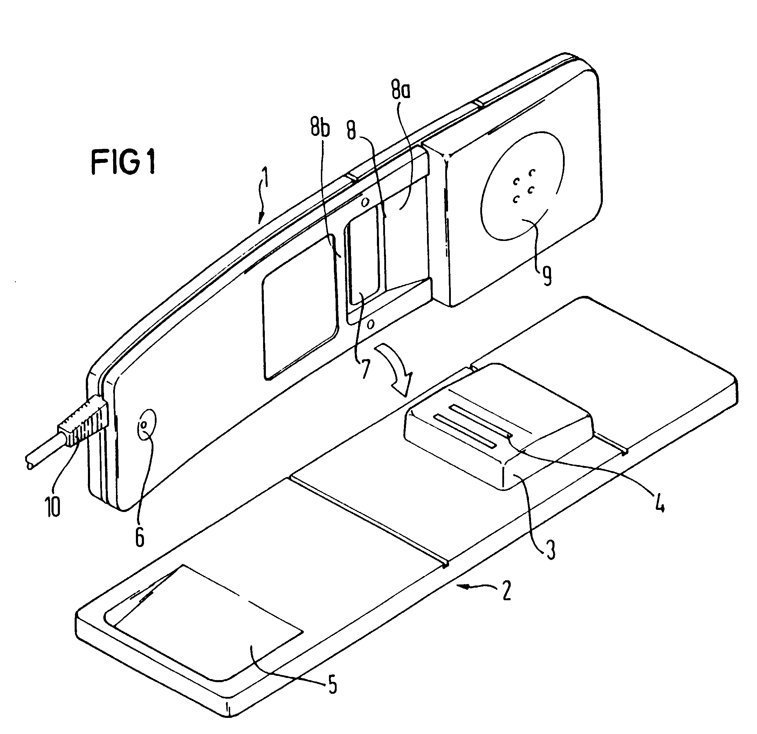

- Die Figur 1: zeigt den Handapparat samt Aufanhmeteil im abgenommenen Zustand.

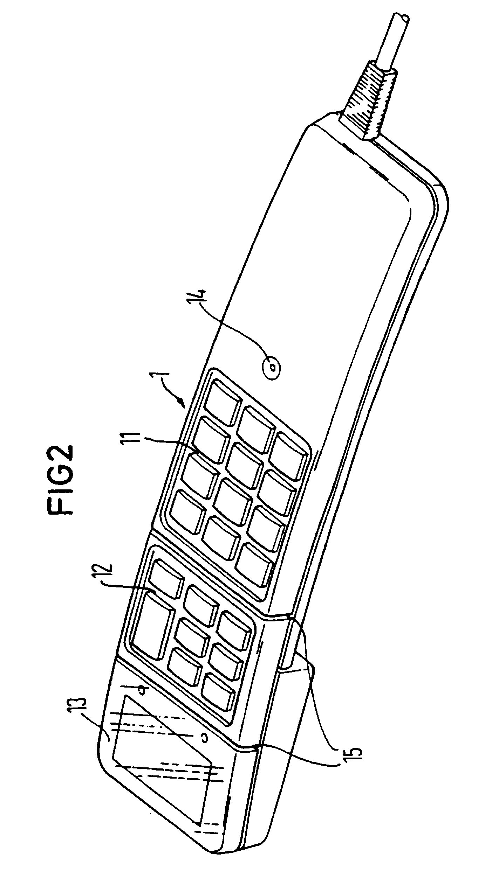

- Die Figur 2: zeigt eine Draufsicht auf das mit Bedienelementen versehene Oberteil des Handapparates.

Der Handapparat 1 besteht aus einem an sich bekannten zweischaligen Element. Die obere Schale trägt hierbei die Bedienungselemente, also eine Wähltastatur 11, darüber eine Zusatztastatur 12 mit beliebig variierbaren Funktionstasten und gegen das hörerseitige Ende zu ein Anzeigefeld 13. Die drei Felder sind durch Konturen voneinander getrennt, die zumindest optisch angedeutet sind. Das Anzeigefeld ist hinsichtlich seiner Umrandung noch einmal dadurch hervorgehoben, daß diese poliert erscheint, was beispielsweise durch ein Zwei-Komponenten-Spritzverfahren erreichbar ist.

Die untere Halbschale des Handapparates trägt in überhöhter Form gegenüber dem restlichen Handapparat den Hörer 9. Anschließend daran ist eine Vertiefung 8 angeordnet, die hörerseitig leicht abgeschrägt (8a) ist und auf der gegenüber liegenden Seite 8b in Längsrichtung des Hörers betrachtet schärfere Konturen aufweist. Diese Vertiefung ist einer entsprechenden Erhöhung 3 auf der Hörerauflage 2 relativ genau angepaßt. Die Erhöhung dient der sicheren Auflage des Hörers auf der Auflage 2 im eingehängten Zustand des Handapparates. Die Auflage 2 bildet wie üblich das Oberteil des Funksprechgerätes, während das Unterteil (nicht dargestellt) als Handfunksprechgerät und/oder als Autofunkgerät ausgebildet sein kann. In der Vertiefung 8 des Handapparates befindet sich am Grunde ein Metallplättchen 7, das zusammen mit einem Magneten 4 in der Erhöhung 3 der Auflage eine Magnethalterung bildet.

Zur zusätzlichen Sicherung des Handapparates in der Halterung insbesondere in Längsrichtung ist in der Halterung am mikrofonseitigen Ende eine der Außenkontur des Handapparates angepaßte schräge Vertiefung 5 angeordnet. Diese Vertiefung ist mit ihrer Schräge der sanft nach innen geneigten Gesamtform des relativ flachen Grundkörpers des Handapparates angepaßt. Durch diese Vertiefung einerseits und den überhöhten Hörer 9 andererseits sowie durch die Kante 8b der Vertiefung wird der Hörer in der besonders wichtigen Längsrichtung auch bei Erschütterungen gut gehalten.

Die Einsprechöffnung für den Handsprechapparat ist durch 6 dargestellt. Am Hörerende befindet sich wie üblich die Anschlußschnur 10. Auf der Oberseite, d.h. Bedienseite des Handapparates ist zusätzlich eine Mikrofeineinsprechöffnung vorgesehen, die für den Gegensprechbetrieb bei aufgelegtem Hörer (sogenanntes Freisprechen) dient.

## Patentansprüche

1. Funksprechgerät der elektrischen Nachrichtentechnik, insbesondere Autofunkgerät, bei dem der aus der Hör-Sprechgarnitur bestehende Handapparat (1) auf der Oberseite mit Bedienungstasten versehen ist und mit der Unterseite im Ruhezustand auf der mit Magnethalterung (4) versehenen Auflage (2) liegt,
**dadurch gekennzeichnet,**
daß der Handapparat (1) aus einem geringfügig nach innen durchgebogenen im übrigen flachen Grundkörper besteht, der innen zum Bedienenden und zur Auflage hin eine Vertiefung (8) hat, in der der eine Teil (7) der Magnethalterung liegt, dessen Gegenpart (4) in einer der Vertiefung angepaßten Erhöhung (3) der Auflage (2) angeordnet ist.

2. Funksprechgerät nach Anspruch 1,
**dadurch gekennzeichnet,**
daß zusätzlich zur Halterung des Handapparates in der Auflage (2) des Funkgerätes eine schräg nach außen in Richtung Mikrofon liegende Vertiefung (5) angeordnet ist, die der Kontur der Mikrofonseite des Handapparates (1) angepaßt ist.

3. Funksprechgerät nach Anspruch 1 oder 2,
**dadurch gekennzeichnet,**
daß das Hörer teil (9) gegenüber dem Rest des Grundkörpers etwas überhöht ist.

4. Funksprechgerät nach einem der vorhergehenden Ansprüche,
**dadurch gekennzeichnet,**
daß auf der der Bedienungselemente tragenden Oberseite des Handapparates (1) durch optische Trennfugen (15) abgesetzte Felder für die bewegliche Tastatur (11) eine Tastatur (12) für Zusatzfunktionen mit variabler Bestückung und einem Anzeigeteil (13) vorgesehen sind.

5. Funksprechgerät nach Anspruch 4,
**dadurch gekennzeichnet,**
daß die Umrandung des Feldes der Anzeige (13) vorzugsweise im Zwei-Schicht-Spritz-Verfahren glänzend poliert ausgeführt ist.

6. Funksprechgerät nach einem der vorhergehenden Ansprüche,
**dadurch gekennzeichnet,**
daß sich unterhalb der Tastenfelder in Richtung zum Mikrofon des Handapparates (1) hin eine Zusatzöffnung (14) für Freisprechen bei aufgelegtem Handapparat befindet.

## Claims

1. Radio telephone for electrical telecommunications, in particular car radio transceiver, in which the handset (1), which comprises the listening/talking set, is provided with operating keys on the top side and, in the rest state, lies with its underside on the support (2), which is provided with a magnetic mount (4), characterized in that the handset (1) comprises a base body which is slightly inwardly bent, and otherwise flat, and has on the inside a depression (8) towards the operating ends and towards the support, in which depression one part (7) of the magnetic mount is situated, the counterpart (4) of which is arranged in a raised part (3), of the support (2), which is matched to the depression.

2. Radio telephone according to Claim 1, characterized in that, in addition to the mount of the handset, there is arranged in the support (2) of the radio transceiver a depression (5) which slopes outwards in the direction of the microphone and is matched to the contour of the microphone end of the handset (1).

3. Radio telephone according to Claim 1 or 2, characterized in that the earpiece part (9) is slightly elevated from the rest of the base body.

4. Radio telephone according to one of the preceding claims, characterized in that zones for the movable keypad (11), a keypad (12) for supplementary functions with variable component parts and a display part (13) are provided on the top side, which is fitted with the operating elements, of the handset (1), which zones are contrasted by visual separating lines (15).

5. Radio telephone according to Claim 4, characterized in that the border of the zone of the display (13) is implemented, preferably using a double-layer injection-moulding process, with a lustrous polish.

6. Radio telephone according to one of the preceding claims, characterized in that an additional opening (14) is located below the keypads towards the microphone of the handset (1), which additional opening is used for hands-free talking with an on-hook handset.

## Revendications

1. Radiotéléphone de la technique électrique de transmission d'informations, notamment radiotéléphone de voiture, dans lequel le combiné (1) constitué par le système écouteur-microphone, comporte, sur sa face supérieure, des touches de fonction et, à l'état de repos, repose par sa face inférieure sur le support (2) pourvu d'un dispositif (4) magnétique de retenue, caractérisé par le fait
que le combiné (1) est constitué par un corps de base légèrement recourbé vers l'intérieur mais pour le reste plat et qui comporte intérieurement en direction de l'utilisateur et du support, un renfoncement (8), dans lequel est disposée une partie (7) du dispositif magnétique de retenue et dont la partie antagoniste (4) est disposée dans une partie surélevée (3) du support (2), adaptée au renfoncement.

2. Radiotéléphone suivant la revendication 1, caractérisé par le fait qu'en plus du dispositif de retenue du combiné dans le support (2) de l'appareil téléphonique, il est prévu un renfoncement (5), qui s'étend obliquement vers l'extérieur en direction du microphone et est adapté au contour du côté microphone du combiné (1).

3. Radiotéléphone suivant la revendication 1 ou 2, caractérisé par le fait que la partie écouteur (9) est un peu surélevée par rapport au reste du corps de base.

4. Radiotéléphone suivant l'une des revendications précédentes, caractérisé par le fait que sur la face supérieure, qui porte les éléments de fonctinnement, du combiné (1) sont prévues des zones qui sont séparées par des fentes (15) de séparation visibles, pour le clavier (11) mobile d'un clavier (12) pour des fonctions supplémentaires, comportant un équipement variable et une partie (13) d'affichage.

5. Radiotéléphone suivant la revendication 4, caractérisé par le fait que l'encadrement de la zone du dispositif (13) d'affichage est réalisé de préférence avec un poli brillant, selon le procédé de projection à deux couches.

6. Radiotéléphone suivant l'une des revendications précédentes, caractérisé par le fait qu'une ouverture (14) supplémentaire permettant une conversation à mains libres alors que le combiné est reposé, se trouve au-dessous du panneau de touches en direction du microphone du combiné (1).
